(19) Europäisches Patentamt
European Patent Office
Office européen des brevets

(11) **EP 1 943 131 B1**

(12) **EUROPÄISCHE PATENTSCHRIFT**

(45) Veröffentlichungstag und Bekanntmachung des Hinweises auf die Patenterteilung:
**25.09.2013 Patentblatt 2013/39**

(21) Anmeldenummer: **06793805.0**

(22) Anmeldetag: **25.09.2006**

(51) Int Cl.:
***B60S 1/34*** *(2006.01)*

(86) Internationale Anmeldenummer:
**PCT/EP2006/066698**

(87) Internationale Veröffentlichungsnummer:
**WO 2007/048669 (03.05.2007 Gazette 2007/18)**

(54) **SCHEIBENWISCHVORRICHTUNG UND VERFAHREN ZUM BETREIBEN EINER SCHEIBENWISCHVORRICHTUNG**

WINDSHIELD WIPING DEVICE AND METHOD FOR THE OPERATION THEREOF

SYSTEME D'ESSUIE-GLACE ET PROCEDE POUR FAIRE FONCTIONNER UN SYSTEME D'ESSUIE-GLACE

(84) Benannte Vertragsstaaten:
**DE ES FR GB**

(30) Priorität: **24.10.2005 DE 102005050773**

(43) Veröffentlichungstag der Anmeldung:
**16.07.2008 Patentblatt 2008/29**

(73) Patentinhaber: **ROBERT BOSCH GMBH**
**70442 Stuttgart (DE)**

(72) Erfinder: **MERKEL, Wilfried**
**77876 Kappelrodeck (DE)**

(56) Entgegenhaltungen:
**JP-A- 6 270 768        US-A- 3 213 478**
**US-A1- 2001 016 964    US-A1- 2002 144 373**

EP 1 943 131 B1

## Beschreibung

Stand der Technik

Die Erfindung betrifft eine Anordnung mit einer Scheibenwischvorrichtung und einer Windschutzscheibe.

Es ist bekannt, dass Scheibenwischvorrichtungen für Kraftfahrzeuge in der Regel einen Wischarm aufweisen, der über eine Wischerlagerachse angetrieben wird. Dabei sind eine oder mehrere Wischerlagerachsen in der Regel geometrisch derart ausgerichtet, dass sie näherungsweise senkrecht zu einer Scheibenoberfläche im Bereich eines gedachten Durchstoßpunktes der Wischerlagerachsen durch die verlängerte Scheibenoberfläche liegen. Bekannt ist weiterhin, dass die geometrische Ausrichtung der Wischerlagerachsen derart ausgebildet ist, dass in Umkehrpositionen der Wischarme eine so genannte Umlegehilfe verwirklicht ist. Dabei ist das von dem Wischarm geführte Wischblatt in den Umkehrpositionen bzw. Endlagen eines Wischfeldes auf der Windschutzscheibe bereits in die neue, entgegengesetzte Bewegungsrichtung des Wischarms geneigt, um ein Umlegen eines Wischgummis des Wischblattes zu unterstützen.

In der Regel zeigen derartige geometrische Orientierungen der Wischerlagerachsen bei mäßigen Fahrgeschwindigkeiten gute Wischergebnisse, vorausgesetzt, dass die verwendeten Komponenten technisch einwandfrei sind. Bei hohen Fahrgeschwindigkeiten können die herkömmlichen Scheibenwischvorrichtungen allerdings eine verringerte Wischqualität aufweisen. Eine Ursache dafür kann eine verringerte Kraft der Wischarmfeder mit einer daraus resultierenden verringerten Anpresskraft des Wischarms auf der Windschutzscheibe sein. Die verringerte Wischqualität kann ferner durch aerodynamische Kräfte auf den Wischarm bedingt sein, die ungünstig auf die Anpresskraft des Wischarms einwirken.

Aufgrund einer abgeknickten Stellung der Wischlippe des Wischgummis können sich im Wischbetrieb gegen die Luftströmung ("Abwärtswischen") höhere Auftriebskräfte als beim Wischen mit der Strömung ("Aufwärtswischen") ergeben. Diesem Umstand versucht man herkömmlicherweise durch ein Drehen der Wischarmgelenkachse relativ zur Wischerlagerachse Rechnung zu tragen. Durch ein derartig gedrehtes Gelenk kann die Anpresskraft des Wischarms beim Wischen gegen die Luftströmung erhöht sein. Einerseits zeigt diese Maßnahme jedoch nur begrenzte Wirkungen, andererseits erfordert sie nachteilig auch stärkere Wischermotoren und damit erhöhte Kosten. Die genannte verringerte Wischqualität kann auch durch einen Einsatz von Spoilern am Wischarm und/oder am Wischblatt oder auch durch eine stärkere Wischarmfeder, die eine erhöhte Anpresskraft erzeugt, kompensiert werden. Diese Maßnahmen verursachen aber ebenfalls erhöhte Kosten und können nachteiligerweise auch eine Lebensdauer der Wischerblätter verringern, die aus einer erhöhten Gummiverformung resultiert.

Ferner sind aus der US 3,213,478, der US 2001/0016964 A1, der JP 06270768 A1 sowie der US 2002/0144373 A1 unterschiedlich ausgebildete Anordnungen der Scheibenwischvorrichtungen bekannt.

Es ist die Aufgabe der Erfindung, eine Anordnung mit einer Scheibenwischvorrichtung mit verbesserten Betriebseigenschaften bereitzustellen.

Die Aufgabe wird gelöst mit einer Anordnung gemäß Patentanspruch 1. Bevorzugte Weiterbildungen der erfindungsgemäßen Vorrichtung und des erfindungsgemäßen Verfahrens sind in abhängigen Ansprüchen definiert. Eine Anordnung einer Scheibenwischvorrichtung gemäß der vorliegenden Erfindung ist für ein Kraftfahrzeug vorgesehen, wobei ein Wischarm mit einer Wischerlagerachse verbunden ist, und wobei der Wischarm über die Wischerlagerachse angetrieben wird. Die Scheibenwischvorrichtung zeichnet sich dadurch aus, dass die Wischerlagerachse eine derartige geometrische Orientierung aufweist, dass bei einer Wischbewegung des Wischarms über eine Scheibe eine im Wesentlichen unidirektionale Änderung der Winkellage des das Wischblatt führenden Teils des Wischarmes zu dem mit der Wischerlagerwelle verbundenen Teils durchgeführt wird.

Durch die im Wesentlichen unidirektionale Änderung des Hubwinkels des Wischarms während der Wischbewegung sind Auftriebskräfte, die während eines operativen Betriebes der Scheibenwischvorrichtung infolge von Fahrtwind auf die Scheibenwischvorrichtung einwirken, günstigerweise vergleichmäßigt und dadurch in ihrer nachteiligen Wirkung verringert. Dadurch kann eine Wischqualität der Scheibenwischvorrichtung im Vergleich zu herkömmlichen Scheibenwischvorrichtungen vorteilhaft erhöht sein. Ferner können auch langfristige Betriebseigenschaften der Scheibenwischvorrichtung, bedingt durch eine verringerte Abnützung des Wischarms und weiterer Komponenten der Scheibenwischvorrichtung, positiv beeinflusst sein.

Erfindungsgemäß sieht die Anordnung vor, dass die im Wesentlichen unidirektionalen Änderungen des Hubwinkels zwischen einer Parklage und einer Umkehrlage durchgeführt werden. Somit kommen die verbesserten Betriebseigenschaften und vorteilhaften Wirkungen der erfindungsgemäßen Anordnung der Scheibenwischvorrichtung während kompletter Wischvorgänge zwischen der Park- und der Umkehrlage der Scheibenwischvorrichtung zur Geltung. Eine verbesserte und bedarfsgerechte Wischqualität über die gesamte Wischfläche einer Windschutzscheibe des Kraftfahrzeugs ist somit nachhaltig unterstützt.

In einer weiteren bevorzugten Ausführungsform der erfindungsgemäßen Anordnung mit der Scheibenwischvorrichtung ist vorgesehen, dass die Wischerlagerachse ferner geometrisch derart ausgerichtet ist, dass in der Park- und/oder in der Umkehrlage eine Funktionalität einer Umlegehilfe für ein Wischblatt des Wischarms ausgestaltet ist. Somit ist die bereits im Stand der Technik bekannte Umlegehilfe durch die erfindungsgemäße Ausrichtung der Wischerlagerachse günstigerweise inkludiert. Eine Langlebigkeit der im Wischbetrieb verwendeten Wischgummis ist mit der erfindungsgemäßen Scheibenwischvorrichtung somit vorteilhaft unterstützt.

Die Erfindung wird nachfolgend anhand mehrerer Figuren detailliert beschrieben. Dabei zeigt:

Fig. 1 einen prinzipiellen Aufbau eines herkömmlichen Wischarms mit einem Wischblatt;

Fig. 2 eine prinzipielle Darstellung einer Windschutzscheibe eines Kraftfahrzeugs mit zwei Wischarmen, die von einem Elektromotor angetrieben werden;

Fig. 3 einen herkömmlichen prinzipiellen Verlauf der Anpresskraft des Wischarms über dem Wischwinkel;

Fig. 4A zwei Detaildarstellungen des herkömmlichen Wischarms aus Fig. 1;

Fig. 4B einen herkömmlichen prinzipiellen Verlauf des Hubwinkels über dem Wischwinkel;

Fig. 5 einen erfindungsgemäßen Verlauf der Anpresskraft über dem Wischwinkel; und

Fig. 6 prinzipielle Verläufe des Hubwinkels über dem Wischwinkel.

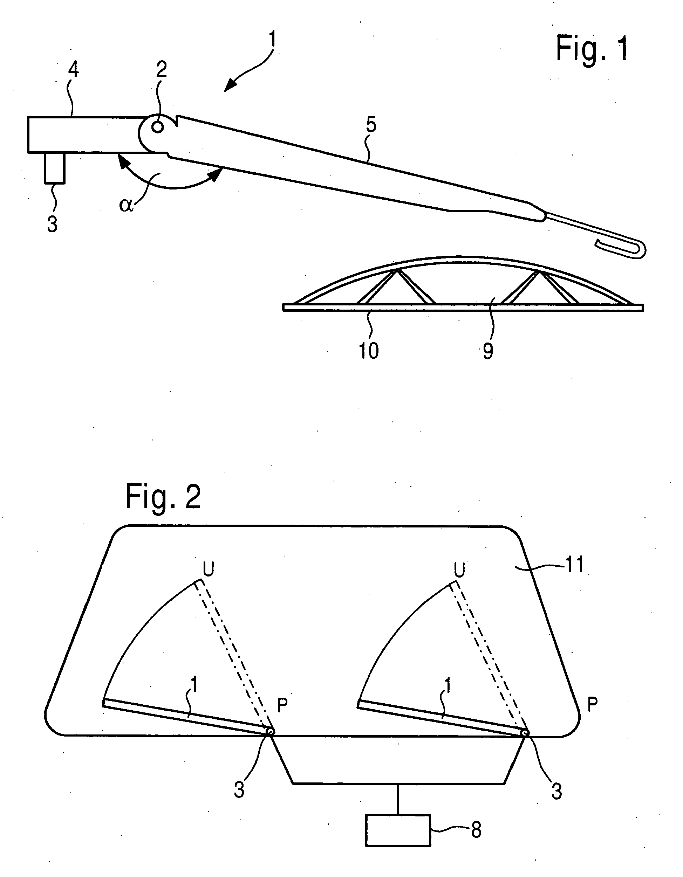

Figur 1 zeigt eine prinzipielle Darstellung einer Ausgestaltung eines herkömmlichen Wischarms 1. Dabei weist der Wischarm 1 einen unteren Bereich 4 und einen oberen Bereich 5 auf, die mit einer Wischarmgelenkachse 2 beweglich miteinander verbunden sind. Zwischen dem unteren Bereich 4 und dem oberen Bereich 5 des Wischarms 1 bildet sich durch eine Drehung um die Wischarmgelenkachse 2 ein Hubwinkel $\alpha$ des Wischarms 1 aus. Der Wischarm 1 wird über eine Wischerlagerachse 3, die mit dem unteren Bereich 4 des Wischarms 1 fest verbunden ist, mechanisch angetrieben. Denkbar ist beispielsweise, dass die Wischerlagerachse 3 über ein Antriebsgestänge mit einem Elektromotor 8 (in Fig. 1 nicht dargestellt) verbunden ist, der über die Wischerlagerachse 3 den Wischarm 1 antreibt. Aus Figur 1 ist ferner erkennbar, dass der Wischarm 1 an einem vorderen, der Wischerlagerachse 3 abgewendeten Ende einen gekrümmten Bereich aufweist, in dem ein Wischblatt 9 mit einem Wischgummi 10 befestigbar ist.

Figur 2 zeigt eine prinzipielle Darstellung einer Windschutzscheibe 11 eines Kraftfahrzeugs, an der eine Scheibenwischvorrichtung mit Wischarmen 1 verwendet wird. Man erkennt, dass die Windschutzscheibe 11 in diesem Ausführungsbeispiel von zwei Wischarmen 1 gewischt wird, wobei die beiden Wischarme 1 über jeweils eine separate Wischerlagerachse 3 angetrieben werden.

Die beiden Wischarme 1 können in Endlagen auf der Windschutzscheibe 11 jeweils eine Parklage P oder eine Umkehrlage U einnehmen, die von den Wischarmen 1 zu wischende Bereiche auf der Windschutzscheibe 11 begrenzen.

Die beiden Wischarme 1 können vom Elektromotor 8 über eine in Figur 2 stark vereinfacht dargestellte Antriebsmechanik angetrieben werden, die eine oszillierende Bewegung der Wischarme 1 auf der Windschutzscheibe 11 erzeugt. Herkömmlicherweise ist die Wischerlagerachse 3 in Relation zur Windschutzscheibe 11 geometrisch derart orientiert, dass der Wischarm 1 in den beiden Lagen P, U derart ausgerichtet ist, dass das Wischblatt 9 in den Lagen P, U bereits in die neue Bewegungsrichtung geneigt ist ("Umlegehilfe"). Dadurch ist vorteilhaft ein Umlegen einer Wischlippe des Wischgummis erleichtert, wodurch eine Lebensdauer des Wischgummis erhöht sowie ein infolge eines Nichtumlegens nachteiliges "Rattern" des Wischgummis auf der Windschutzscheibe 11 vermieden werden. Der Wischgummi kann auf diese Weise, ausgehend von den Endlagen P, U verbessert in die jeweils entgegenliegende Endlage P, U "gezogen" werden.

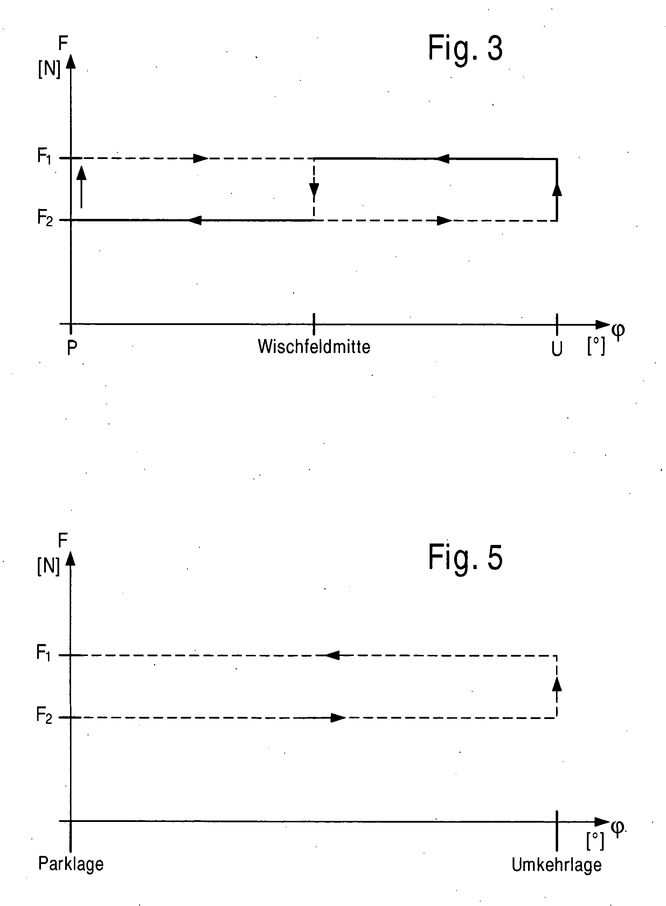

Figur 3 zeigt einen prinzipiellen Verlauf der Anpresskraft F des Wischarms 1 über einem Wischwinkel $\varphi$. Es ist erkennbar, dass in der Parklage P (Wischwinkel $\varphi \approx 0°$) der Wischarm 1 mit einer Kraft $F_1$ an die Windschutzscheibe 11 angepresst wird. Im Verlaufe der Bewegung des Wischarms von der Parklage P zur Umkehrlage U tritt ungefähr in der Wischfeldmitte ein abrupter Abfall der Anpresskraft F ein. Ab der Wischfeldmitte erfolgt sodann der Wischvorgang in Richtung Umkehrlage U mit einer verringerten Anpresskraft $F_2$ (gestrichelter Verlauf). In der Umkehrlage U springt die Anpresskraft des Wischarms 1 vom Wert $F_2$ auf den Wert $F_1$, um den Wischvorgang aus der Umkehrlage U in die Parklage P fortzusetzen.

Diese Phase des Wischvorgangs ("Abwärtswischen") wird während einer Fahrt des Kraftfahrzeugs gegen den Fahrtwind durchgeführt und ist dadurch mit erhöhten Auftriebskräften auf den Wischarm 1 konfrontiert. Ungefähr in der Wischfeldmitte erfolgt wiederum ein Abfall der Anpresskraft vom größeren Wert $F_1$ zum kleineren Wert $F_2$, um danach bis zur Parklage P mit der verringerten Kraft $F_2$ fortgesetzt zu werden. Somit tritt im Verlauf der Anpresskraft F eine Hysterese auf, wobei das Wischfeld im Laufe des Wischvorgangs zwischen Parklage P und Umkehrlage U nachteilig mit unterschiedlich großen Anpresskräften F gewischt wird.

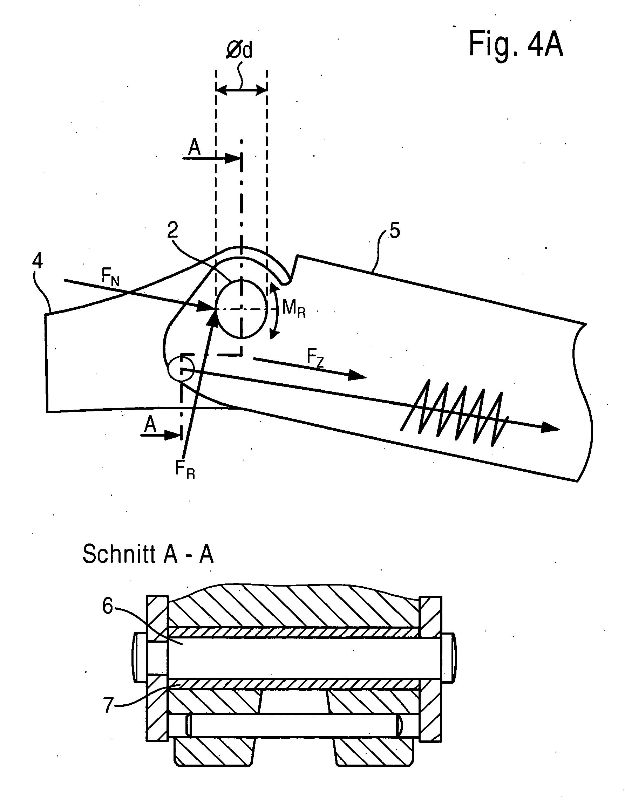

Anhand von Figur 4A wird deutlich, weshalb es ungefähr in der Wischfeldmitte zu den in Figur 3 dargestellten Sprüngen in der Anpresskraft F kommt. Dazu wird anhand der Figur 4A eine vereinfachte kinematische Analyse des Wischarms 1 durchgeführt, aus der auf den Wischarm 1 wirkende Kräfte und Momente erkennbar sind. Figur 4A zeigt in einer linken Abbildung ein vergrößertes Detail der Figur 1. Dabei ist der untere Bereich 4 des Wischarms 1, der obere Bereich 5 des Wischarms 1 sowie die Wischarmgelenkachse 2, die die beiden Bereiche 4, 5 des Wischarms 1 beweglich miteinander verbindet, dargestellt. In einer rechten Abbildung der Figur 4A, die eine Schnittdarstellung A-A der linken Abbildung von Figur 4A zeigt, ist erkennbar, weshalb in der Wischarmgelenkachse 2 Coulomb'sche Reibungskräfte $F_R$ auftreten. Diese rühren vorwiegend daher, dass die Wischarmgelenkachse 2 als ein Stift 6 und eine Buchse 7 ausgebildet sind, wobei durch eine Drehung des Stifts 6 in der Buchse 7 unter der Belastung durch die Wischarmfeder die genannten Reibungskräfte $F_R$ entstehen.

In der linken Abbildung von Figur 4A ist weiterhin dargestellt, dass durch eine Wirkung einer Wischarmfeder (in Fig. 4A schematisch dargestellt) eine Zugkraft $F_Z$ in axialer Richtung zum oberen Bereich 5 auf die Wischarmgelenkachse 2 ausgeübt wird. Diese Zugkraft $F_Z$ wirkt im Wesentlichen als eine auf die Wischarmgelenkachse 2 wirkende Normalkraft $F_N$. Durch eine Drehung des oberen Bereichs 5 um die Wischarmgelenkachse 2 wird aus der Reibungskraft $F_R$ ein Reibungsmoment $M_R$ in der Wischarmgelenkachse 2 generiert. Diese Reibung (Coulomb'sche Reibung) im Wischarmgelenk erschwert die Drehbewegung des beweglichen Wischarmteils um die Wischarmgelenkachse 2. Sie reduziert auf diese Weise die Anpresskraft F beim Senken des Wischarmendes (Verringern des Hubwinkels $\alpha$) und wirkt unterstützend auf die Anpresskraft F beim Anheben des Wischarmendes (Vergrößern des Hubwinkels $\alpha$) während des Wischens. In der beschriebenen Weise wird also die in der Figur 3 dargestellte Hysterese der Anpresskraft F beim Heben und Senken des Wischarms 1 erzeugt. Das Reibungsmoment $M_R$ lässt sich mathematisch folgendermaßen ausdrücken:

$$M_R = 1/2 \cdot d \cdot F_R$$

mit den Parametern:

$M_R$    Reibungsmoment
d       Durchmesser der Wischarmgelenkachse 2
$F_R$    Reibungskraft

Ein Zusammenhang zwischen der Reibungskraft $F_R$ und der Normalkraft $F_N$ auf die Wischarmgelenkachse 2 lässt sich durch folgende mathematische Beziehung ausdrücken :

$$F_R = \mu \cdot F_N$$

mit den Parametern:

$F_R$    Reibungskraft auf die Wischarmgelenkachse 2
$F_N$    Normalkraft auf die Wischarmgelenkachse 2
$\mu$    Reibungskoeffizient

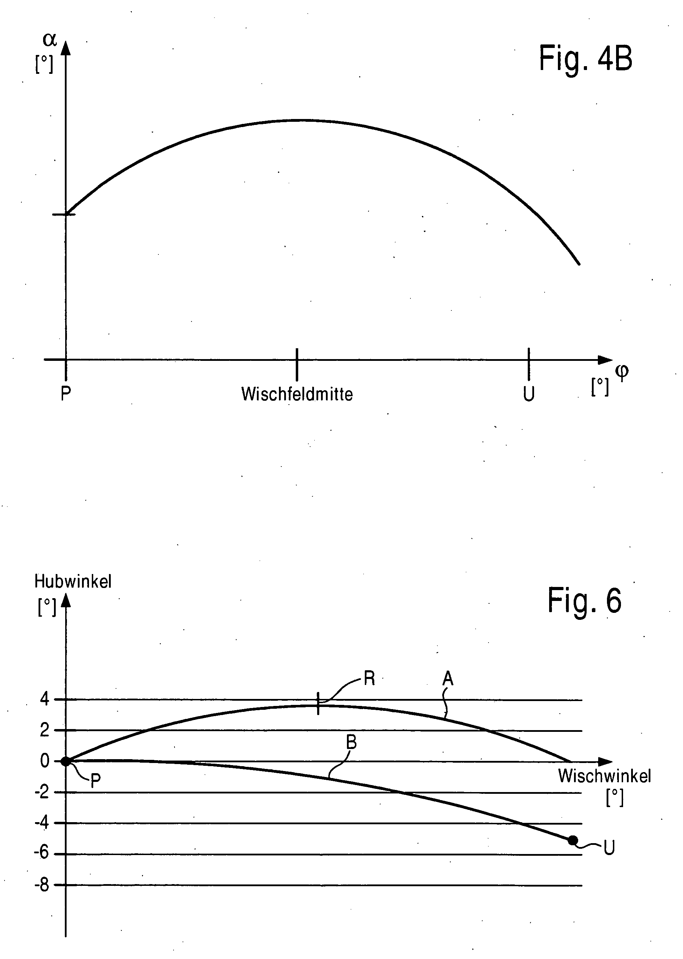

Figur 4B zeigt einen prinzipiellen Verlauf des Hubwinkels $\alpha$ über dem Wischwinkel $\varphi$ gemäß Stand der Technik. Es ist erkennbar, dass aufgrund der im Wesentlichen senkrecht zur Scheibenoberfläche ausgerichteten Wischerlagerachse 3 von der Parklage P ausgehend der Hubwinkel $\alpha$ zur Wischfeldmitte hin permanent ansteigt. Ab der Wischfeldmitte zur Umkehrlage U reduziert sich der Hubwinkel $\alpha$ während des Wischens wieder, um dann in der entgegengesetzten Wischrichtung zur Wischfeldmitte hin wiederum anzusteigen und ab der Wischfeldmitte zur Parklage P hin abzufallen. Die Coulomb'sche Reibungskraft in der Wischarmgelenkachse 2 unterstützt bei einem Wischverlauf von der Parklage P zur Wischfeldmitte die Anpresskraft F. Sie vermindert allerdings die Anpresskraft F beim Wischen ab circa der Wischfeldmitte bis zur Umkehrlage U. Somit wirkt die Reibungskraft einerseits vorteilhaft unterstützend, andererseits aber nachteilig vermindernd auf die Anpresskraft F.

Mit der anhand der Figur 4A erläuterten Kinematik des Wischarms 1 wird also deutlich, warum die Anpresskraft F bei herkömmlichen Wischersystemen bei der Wischfeldmitte die drastischen Sprünge in der Anpresskraft erleidet, die eine Wischqualität insbesondere bei hohen Fahrgeschwindigkeiten nachhaltig verschlechtern kann.

Erfindungsgemäß ist nunmehr die Wischerlagerachse 3 derart geometrisch ausgerichtet; dass als Folge dieser Ausrichtung über den gesamten Wischverlauf eine im Wesentlichen unidirektionale Änderung des Hubwinkels $\alpha$ über den Wischwinkel $\varphi$ resultiert. Der Hubwinkel $\alpha$ weist in der Parklage P einen Maximalwert auf und in der Umkehrlage U einen Minimalwert. Daraus ergibt sich, dass während des gesamten Wischens von der Umkehrlage U zur Parklage P die Coulomb'sche Reibungskraft in der Wischarmgelenkachse 2 die Anpresskraft F unterstützt, was günstige Betriebseigenschaften bei Auftriebskräften auf den Wischarm 1 infolge von Fahrtwind bedeutet. Die Anpresskraft $F_1$ ist also vorteilhaft gerade dann maximal, wenn sie auch benötigt wird und erzeugt somit verbesserte und gleichmäßigere Wischergebnisse. Beim Wischen von der Parklage P zur Umkehrlage U wird mit der verringerten Anpresskraft $F_2$ gewischt. Diese reicht für ein gutes Wischergebnis aus, da die Windkraft die Anpresskraft F während des Aufwärtswischens im Wesentlichen unterstützt.

Für ein erfindungsgemäßes Scheibenwischersystem ergibt sich somit ein Verlauf der Anpresskraft über dem Wischwinkel $\varphi$ wie er in Figur 5 prinzipiell dargestellt ist. Es ist der Figur 5 zu entnehmen, dass die im Stand der Technik nachteilige Hysterese im Verlauf der Anpresskraft nur einmalig auftritt. Dies bedeutet, dass der herkömmliche Sprung in der Anpresskraft bei circa der Wischfeldmitte eliminiert ist und ein Wischvorgang des Wischarms 1 zwischen den Endlagen P,U mit jeweils konstanter Anpresskraft F durchgeführt wird. Beim Wischen aus der Parklage P ("Aufwärts") wird das Wischen mit der niedrigeren Anpresskraft $F_2$ durchgeführt und beim Wischen aus der Umkehrlage ("abwärts") mit der

höheren Anpresskraft $F_1$. Als besonders vorteilhaft wird dabei angesehen, dass die sprunghafte Änderung der Anpresskraft in Wischfeldmitte vermieden wird und beim Abwärtswischen gegen den Fahrtwind konstant die höhere Anpresskraft $F_1$ verwendet wird. Diese höhere Anpresskraft F ist insbesondere zur Kompensation des in dieser Wischrichtung höheren Auftriebs vorteilhaft.

Verglichen mit den herkömmlichen Wischersystemen sind mit der erfindungsgemäßen Scheibenwischvorrichtung bei gleichbleibender Auflagekraft wesentlich höhere Fahrgeschwindigkeiten des Kraftfahrzeugs mit sehr guter Wischqualität möglich. Sofern die bisherigen Betriebseigenschaften der Scheibenwischvorrichtung bei hohen Fahrgeschwindigkeiten ausreichen, kann mittels der Erfindung vorteilhaft die Anpresskraft F reduziert bzw. ein kleinerer und damit kostengünstigerer Wischermotor verwendet werden. Eine Betriebsdauer der verwendeten Komponenten kann somit nachhaltig erhöht sein.

Als vorteilhaft wird bei der Erfindung weiterhin angesehen, dass die im Stand der Technik bekannte Umlegehilfe auch bei der erfindungsgemäßen Scheibenwischvorrichtung verwirklicht ist. Zu diesem Zweck ist die geometrische Ausrichtung der Wischerlagerachse 3 weiterhin derart ausgestaltet, dass die für die Funktionalität der Umlegehilfe notwendige Winkeldifferenz zwischen der Wischblattstellung in der Parklage P und in der Umkehrlage U erreicht wird. Um dabei im Wesentlichen gleichmäßige Eigenschaften der Umlegehilfe in der Parklage P und in der Umkehrlage U zu erzielen, kann es günstig sein, eine Verdrillung ("Schränkung") des oberen Bereichs 5 des Wischarms 1 in Relation zum unteren Bereich 4 vorzusehen.

Eine optimale geometrische Ausrichtung gemäß der Erfindung kann mittels eines Rechenprogramms auf einer Datenverarbeitungsanlage, beispielsweise einer CAD- 3D- Simulation, ermittelt werden. Die erfindungsgemäße Ausrichtung der Wischerlagerachse 3 ist dadurch gekennzeichnet, dass sie gegenüber herkömmlichen Ausrichtungen wesentlich stärker in Richtung Fahrzeugmitte und in Richtung Motorhaube ausgebildet ist. Mithilfe der genannten Verdrillung kann die Funktionalität der Umlegehilfe zwischen der Parklage P und der Umkehrlage U feinjustiert bzw. korrigiert oder gewichtet werden.

Figur 6 zeigt zwei Verläufe des Hubwinkels $\alpha$ über dem Wischwinkel $\varphi$. Dabei zeigt die Figur 6 in einem Verlauf A einen herkömmlichen Verlauf des Hubwinkels $\alpha$ über dem Wischwinkel $\varphi$ bei dem der Hubwinkel $\alpha$ ungefähr zur Wischfeldmitte hin ansteigt und danach zur Umkehrlage U hin abfällt. Mit R ist ein Umkehrpunkt des Hubwinkels $\alpha$ bezeichnet. Im Vergleich dazu ist in der Figur 6 in einem Verlauf B ein erfindungsgemäßer Verlauf des Hubwinkels $\alpha$ über dem Wischwinkel dargestellt. Es ist erkennbar, dass von der Parklage P bis zur Umkehrlage U durchgängig eine im Wesentlichen konstante Abnahme des Hubwinkels $\alpha$ erfolgt. Die in der Figur 6 dargestellte Bemaßung des Hubwinkels $\alpha$ in Grad ist als lediglich beispielhaft anzusehen.

## Patentansprüche

1. Anordnung mit einer Scheibenwischvorrichtung und einer Windschutzscheibe (11), wobei die Scheibenwischvorrichtung einen Wischarm (1) aufweist, der eine Parkposition und eine Umkehrposition (U) aufweist und durch eine Wischerlagerachse (3) angetrieben wird, wobei der Wischarm (1) einen oberen Bereich (5) und einen unteren Bereich (4) umfasst, die gelenkig mit einer Wischerarmgelenkachse (2) miteinander verbunden sind, wobei der untere Bereich (4) des Wischarms (1) mit der Wischerlagerachse (3) fest verbunden ist, wobei zwischen dem unteren Bereich (4) und dem oberen Bereich (5) des Wischarms (1) sich durch eine Drehung des Wischarms (1) um die Wischarmgelenkachse (2) ein Hubwinkel ($\alpha$) ausbildet, **dadurch gekennzeichnet, dass** die Wischerlagerachse (3) derart in Relation zur Windschutzscheibe (11) ausgerichtet ist, dass über den gesamten Wischverlauf bei einer Wischbewegung des Wischarms (1) über die Windschutzscheibe (11) von der Parklage (P) in die Umkehrlage (U) eine im Wesentlichen unidirektionale konstante Abnahme des Hubwinkels ($\alpha$) des Wischarms (1) erfolgt.

2. Anordnung nach Anspruch 1, **dadurch gekennzeichnet, dass** an dem oberen Bereich (5) des Wischarms (1) ein Wischerblatt (9) mit einer Umlegehilfe angeordnet ist, wobei die Wischerlagerachse (3) so ausgerichtet ist, dass in der Parklage (P) und/oder in der Umkehrlage (U) das Wischerblatt (9) in Richtung der darauffolgenden Wischbewegung des Wischarms (1) ausgerichtet ist.

3. Anordnung nach Anspruch 2, **dadurch gekennzeichnet, dass** der Wischarm (1) derart ausgebildet ist, dass das Wischerbatt (9) mittels der Umlegehilfe in der Parklage (P) und in der Umkehrlage (U) im Wesentlichen in Richtung der darauffolgenden Wischbewegung des Wischarms (1) ausgerichtet ist.

## Claims

1. Arrangement with a windscreen wiping device and a windscreen (11), wherein the windscreen wiping device has a wiper arm (1) which has a parking position and a reversing position (U) and is driven by a wiper bearing pin (3), wherein the wiper arm (1) comprises an upper region (5) and a lower region (4), which regions are connected to each other in an articulated manner by a wiper-arm hinge pin (2), wherein the lower region (4) of the wiper arm (1) is fixedly connected to the wiper bearing pin (3), where-

in a lifting angle ($\alpha$) is formed between the lower region (4) and the upper region (5) of the wiper arm (1) by rotation of the wiper arm (1) about the wiper-arm hinge pin (2), **characterized in that** the wiper bearing pin (3) is oriented in relation to the windscreen (11) in such a manner that a substantially unidirectional, constant decrease in the lifting angle ($\alpha$) of the wiper arm (1) takes place over the entire wiping profile during a wiping movement of the wiper arm (1) over the windscreen (11) from the parking position (P) into the reversing position (U).

2. Arrangement according to Claim 1, **characterized in that** a wiper blade (9) with a tilting aid is arranged on the upper region (5) of the wiper arm (1), wherein the wiper bearing pin (3) is oriented in such a manner that the wiper blade (9) is oriented in the direction of the subsequent wiping movement of the wiper arm (1) in the parking position (P) and/or in the reversing position (U).

3. Arrangement according to Claim 2, **characterized in that** the wiper arm (1) is designed in such a manner that the wiper blade (9) is oriented substantially in the direction of the subsequent wiping movement of the wiper arm (1) in the parking position (P) and in the reversing position (U) by means of the tilting aid.

**Revendications**

1. Agencement comprenant un dispositif d'essuie-glace et un pare-brise (11), le dispositif d'essuie-glace comprenant un bras d'essuie-glace (1) qui présente une position de rangement et une position d'inversion (U) et est entraîné par un axe de palier d'essuie-glace (3), le bras d'essuie-glace (1) comportant une région supérieure (5) et une région inférieure (4) qui sont reliées l'une à l'autre de manière articulée à l'aide d'un axe d'articulation de bras d'essuie-glace (2), la région inférieure (4) du bras d'essuie-glace (1) étant reliée solidement à l'axe de palier d'essuie-glace (3), un angle de course ($\alpha$) se formant entre la région inférieure (4) et la région supérieure (5) du bras d'essuie-glace (1) par une rotation du bras d'essuie-glace (1) autour de l'axe d'articulation de bras d'essuie-glace (2), **caractérisé en ce que** l'axe de palier d'essuie-glace (3) est orienté par rapport au pare-brise (11) de telle sorte que, sur toute la courbe de balayage lors d'un mouvement de balayage du bras d'essuie-glace (1) sur le pare-brise (11) de la position de rangement (P) à la position d'inversion (U), une diminution constante essentiellement unidirectionnelle de l'angle de course ($\alpha$) du bras d'essuie-glace (1) ait lieu.

2. Agencement selon la revendication 1, **caractérisé en ce qu'**un balai d'essuie-glace (9) pourvu d'une aide au basculement est disposé sur la région supérieure (5) du bras d'essuie-glace (1), l'axe de palier d'essuie-glace (3) étant orienté de telle sorte que, dans la position de rangement (P) et/ou dans la position d'inversion (U), le balai d'essuie-glace (9) soit orienté dans la direction du mouvement de balayage subséquent du bras d'essuie-glace (1).

3. Agencement selon la revendication 2, **caractérisé en ce que** le bras d'essuie-glace (1) est réalisé de telle sorte que le balai d'essuie-glace (9) soit orienté au moyen de l'aide au basculement, dans la position de rangement (P) et dans la position d'inversion (U), essentiellement dans la direction du mouvement de balayage subséquent du bras d'essuie-glace (1).

Fig. 1

Fig. 2

Fig. 3

Fig. 5

# Fig. 4A

## Schnitt A - A

Fig. 4B

P          Wischfeldmitte          U          [°] φ

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3213478 A
- US 20010016964 A1
- JP 06270768 A
- US 20020144373 A1